# EUROPEAN PATENT SPECIFICATION

(11) **EP 3 725 151 B1**
(45) Date of publication and mention of the grant of the patent: **10.05.2023**
(21) Application number: 18887413.5
(22) Date of filing: 06.12.2018
(51) Int. Cl.: A01G 31/06, A01G 31/02, A01G 31/00

(54) **HYDROPONICS DEVICE**
HYDROPONISCHE VORRICHTUNG
DISPOSITIF HYDROPONIQUE

(30) Priority: 13.12.2017 JP 2017238260
(43) Date of publication of application: 21.10.2020
(73) Proprietor: Panasonic Intellectual Property Management Co., Ltd., Osaka-shi, Osaka 540-6207 (JP)
(72) Inventor: OGATA, Satoshi, Osaka-shi, Osaka 540-6207 (JP); TAOMOTO, Akira, Osaka-shi, Osaka 540-6207 (JP)
(74) Representative: Müller-Boré & Partner Patentanwälte PartG mbB
(86) International application number: PCT/JP2018/044830
(87) International publication number: WO 2019/116999

(56) References cited:
- EP-A1- 2 614 882
- WO-A1-2017/138054
- WO-A1-2018/190087
- BE-A3- 1 005 439
- JP-A- 2015 096 048
- JP-A- 2017 147 970
- JP-U- S63 127 348
- US-A- 3 868 787

## Description

### TECHNICAL FIELD

The present disclosure relates to a hydroponics device that cultivates a plant without using soil.

### BACKGROUND ART

Conventionally, there have been developed hydroponics devices that grow plants in cultivation tanks through which a nutrient solution flows with roots of the plants immersed in the nutrient solution. For example, as disclosed in Patent Literature 1, one of such hydroponics devices uses a pump and circulates a nutrient solution between a cultivation tank containing underground parts of plants and a nutrient solution tank reserving the nutrient solution by way of a supply flow channel and a discharge flow channel.

US 3 868 787 A describes a holder for supporting hydroponically cultivated plants including a receptacle having a tapered interior wall surface and an open bottom through which the plant stem is adapted to extend into a supply of aqueous nutrient solution. Yieldable inserts, typically of foam plastic, are carried by the receptacle, the inserts having outer surfaces engaging the interior wall of the receptacle and inner surface adapted to engage the plant stem to support the plant both laterally and vertically.

BE 1 005 439 A3 describes a device comprising at least one tubular nutrient solution feed pipe located outside the tank and provided with flexible hoses, the end of which is provided with means for injection by spraying.

WO 2017/138054 A1 describes a hydroponic cultivation apparatus comprising a cultivation tank that has a light shielding property and is configured to accommodate underground part of a plant, and a partitioning portion that has a light shielding property and that is configured to cover the opening at the upper end of the cultivation tank and partitions an underground space where the underground part of the plant grows and an aboveground space where aboveground part of the plant grows.

### CITATION LIST

### PATENT LITERATURE

Patent Literature 1: Japanese Unexamined Patent Application Publication No. 2017-29144

### SUMMARY OF INVENTION

### PROBLEMS TO BE SOLVED BY THE INVENTION

During experiments of hydroponics, the disclosers of the present application noticed that it is favorable that the flow rate of a nutrient solution flowing into a cultivation tank from a supply flow channel be maintained at a substantially constant value for adequate growth of a plant. One of the reasons is that, when the flow rate of the nutrient solution supplied into the cultivation tank is too low, it is impossible to supply the root with a required amount of the nutrient solution. Additionally, another one of the reasons is that, when the flow rate of the nutrient solution supplied into the cultivation tank is too high, the liquid level rises in the cultivation tank, so that the nutrient solution may overflow from the cultivation tank, and not only the root but also other parts of the plant that are not desired to be immersed in the nutrient solution may also be immersed in the nutrient solution.

However, since the conventional hydroponics device has no measures taken to stabilize the flow rate of the nutrient solution flowing into the cultivation tank from the supply flow channel, the flow rate of the nutrient solution flowing into the cultivation tank from the supply flow channel is varied greatly in some cases.

The present disclosure has been made in view of the above-described problems of the conventional technique. Then, it is an object of the present disclosure to provide a hydroponics device that can stabilize a flow rate of a nutrient solution flowing into a cultivation tank from a supply flow channel.

### MEANS FOR SOLVING THE PROBLEMS

The above-described problems are solved by the hydroponics device according to independent claim 1. Specific embodiments are defined in the dependent claims.

The hydroponics device includes a cultivation tank that constitutes a flow channel through which a nutrient solution to be supplied to a plant flows; a nutrient solution tank that reserves the nutrient solution; a supply flow channel that guides the nutrient solution from the nutrient solution tank to the cultivation tank; a discharge flow channel that guides the nutrient solution from the cultivation tank to the nutrient solution tank; and a pump that circulates the nutrient solution between the nutrient solution tank and the cultivation tank by way of the supply flow channel and the discharge flow channel, in which the supply flow channel has a ventilation path that allows an external space of the supply flow channel and an internal space of the supply flow channel to communicate with each other, and the ventilation path inhibits a variation in a flow rate of the nutrient solution flowing into the cultivation tank from the supply flow channel.

### EFFECTS OF THE INVENTION

According to a hydroponics device of the present disclosure, it is possible to stabilize a flow rate of a nutrient solution flowing into a cultivation tank from a supply flow channel.

### BRIEF DESCRIPTION OF DRAWINGS

[Fig. 1] Fig. 1 is a vertical cross-sectional view illustrating an overall configuration of a hydroponics device of an embodiment of the present disclosure.
[Fig. 2] Fig. 2 is a perspective view for describing an internal space of a cultivation tank of a hydroponics device of an embodiment 1 of the present disclosure.
[Fig. 3] Fig. 3 is a partial cut view illustrating a ventilation path and a peripheral configuration thereof of the hydroponics device of the embodiment 1 of the present disclosure.
[Fig. 4] Fig. 4 is a partial cut view illustrating a ventilation path and a peripheral configuration thereof of a hydroponics device of an embodiment 2 of the present disclosure.
[Fig. 5] Fig. 5 is a perspective view for describing an internal space of a cultivation tank of a hydroponics device of an embodiment 3 of the present disclosure.
[Fig. 6] Fig. 6 is a perspective view for describing an internal space of a cultivation tank of a hydroponics device of an embodiment 4 of the present disclosure.
[Fig. 7] Fig. 7 is a perspective view for describing a support unit provided in a cultivation tank of a hydroponics device of an embodiment 5 of the present disclosure.
[Fig. 8] Fig. 8 is a perspective view for describing an internal space of the cultivation tank of the hydroponics device of the embodiment 5 of the present disclosure.

### DESCRIPTION OF EMBODIMENTS

Hereinafter, hydroponics devices of embodiments are described with reference to the drawings.

Hereinafter, the hydroponics devices of the embodiments are described with reference to the drawings. In the following multiple embodiments, portions assigned with the same reference sign function in the same way even if there are some differences between the shapes in the drawings, unless stated otherwise.

### (Embodiment 1)

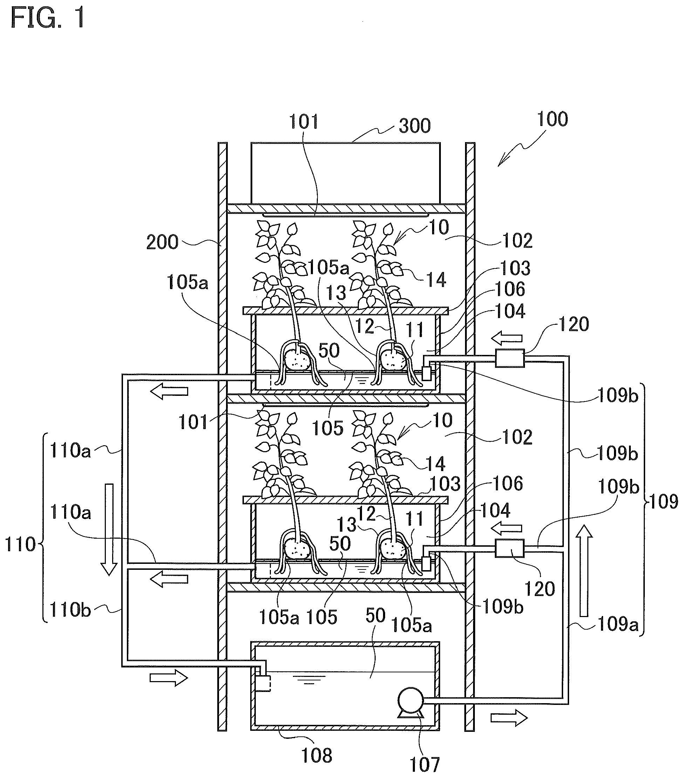

A hydroponics device 100 of an embodiment 1 is described with reference to Figs. 1 to 3.

As illustrated in Fig. 1, the hydroponics device 100 of this embodiment includes a multi-shelf type rack 200. A cultivation tank 106 is disposed on each shelf of the multi-shelf type rack 200. The hydroponics device 100 of this embodiment cultivates a plant 10 without using soil.

The plant 10 is assumed to be a potato as an example of a stem tuber plant. The plant 10 has a stem tuber 11, a main stem 12 extending from the stem tuber 11, a root 13 extending from an underground part of the main stem 12, and a leaf 14 formed at an above-ground part of the main stem 12. Note that, the plant 10 may not only be a stem tuber plant such as potato but also be another plant that grows a storage organ as an underground part including a root tuber plant such as a sweet potato.

The hydroponics device 100 uses a power source of a power source box 300 to irradiate the plant 10 with light of a lighting unit 101 and also to drive a pump 107 described later. The leaf 14 of the plant 10 photosynthesizes with the light emitted from the lighting unit 101.

The hydroponics device 100 includes a cultivation tank 106. When the plant 10 is being cultivated, the cultivation tank 106 reserves a nutrient solution 50 therein. The stem tuber 11 of the plant 10 is supported by a plate-shaped support unit 105, and a tip end portion of the root 13 of the plant 10 passes through a root through-hole 105a of the support unit 105 and reaches the nutrient solution 50.

According to the hydroponics device 100 of this embodiment, the plant 10 can grow by absorbing the nutrient solution 50. Additionally, the support unit 105 inhibits the nutrient solution 50 from adhering to an underground part other than the root 13 of the plant 10 such as a newly formed stem tuber (not illustrated). The nutrient solution 50 is supplied by the pump 107 to each of the multiple cultivation tanks 106 by way of a supply flow channel 109.

The cultivation tank 106 includes a partition unit 103 attached near an upper end opening of the cultivation tank 106. The partition unit 103 separates an above-ground space 102 in which the above-ground part of the plant 10 grows from an underground space 104 in which the underground part of the plant 10 grows. The underground space 104 is surrounded by the partition unit 103 and the cultivation tank 106.

The hydroponics device 100 includes the cultivation tank 106, a nutrient solution tank 108, the supply flow channel 109, a discharge flow channel 110, the pump 107, and a flow amount adjustment unit 120. The flow amount adjustment unit 120 in this embodiment is a valve that maintains the flow amount of the nutrient solution 50 substantially constant. Note that, although there is illustrated an example where two cultivation tanks 106 are arranged in a vertical direction in Fig. 1, there may be three or more cultivation tanks 106 arranged in the vertical direction.

In this embodiment, the multiple cultivation tanks 106 are provided at different height positions. Each of the multiple cultivation tanks 106 constitutes a part of a flow channel through which the nutrient solution 50 flows. The nutrient solution tank 108 reserves the nutrient solution 50 to be supplied to the cultivation tank 106. The supply flow channel 109 guides the nutrient solution 50 from the nutrient solution tank 108 to each of the multiple cultivation tanks 106. The discharge flow channel 110 guides the nutrient solution 50 from each of the multiple cultivation tanks 106 to the nutrient solution tank 108.

The pump 107 is provided in the nutrient solution tank 108 and circulates the nutrient solution 50 between the nutrient solution tank 108 and each of the multiple cultivation tanks 106 by way of the supply flow channel 109 and the discharge flow channel 110.

Each of the multiple flow amount adjustment units 120 is provided in each of multiple branch flow channels 109b branched from a trunk flow channel 109a of the supply flow channel 109 and adjusts the flow amount of the nutrient solution 50 flowing through the branch flow channel 109b. That is, the multiple flow amount adjustment units 120 are provided for the multiple branch flow channels 109b respectively. In this embodiment, the multiple flow amount adjustment units 120 are valves that equalize the amounts of flows through the multiple branch flow channels 109b with each other.

In the discharge flow channel 110, the nutrient solution 50 discharged from the cultivation tank 106 flows through multiple branch pipes 110a, and thereafter the flows join together at a trunk pipe 110b. The nutrient solution 50 flows into the nutrient solution tank 108 from the trunk pipe 110b of the discharge flow channel 110.

This makes it possible to supply a substantially same amount of the nutrient solution 50 to the multiple cultivation tanks 106 per unit time even when there is a difference in pressure between the flows of the nutrient solution 50 through the multiple branch flow channels 109b due to the difference in height position between the multiple cultivation tanks 106.

Note that, the flow amounts of the nutrient solution 50 to be supplied to each of the multiple cultivation tanks 106 may be adjusted to be different from each other as long as the flow amounts are adequate for the cultivation of the plant 10 in the multiple cultivation tanks 106. That is, the multiple flow amount adjustment units 120 may be anything as long as the multiple flow amount adjustment units 120 can prevent the flow amounts of the nutrient solution 50 to be supplied to each of the multiple cultivation tanks 106 from being determined depending on the heights of the multiple cultivation tanks 106. In other words, the multiple flow amount adjustment units 120 may adjust the flow amounts of the nutrient solution 50 flowing into each of the multiple cultivation tanks 106 in any aspects.

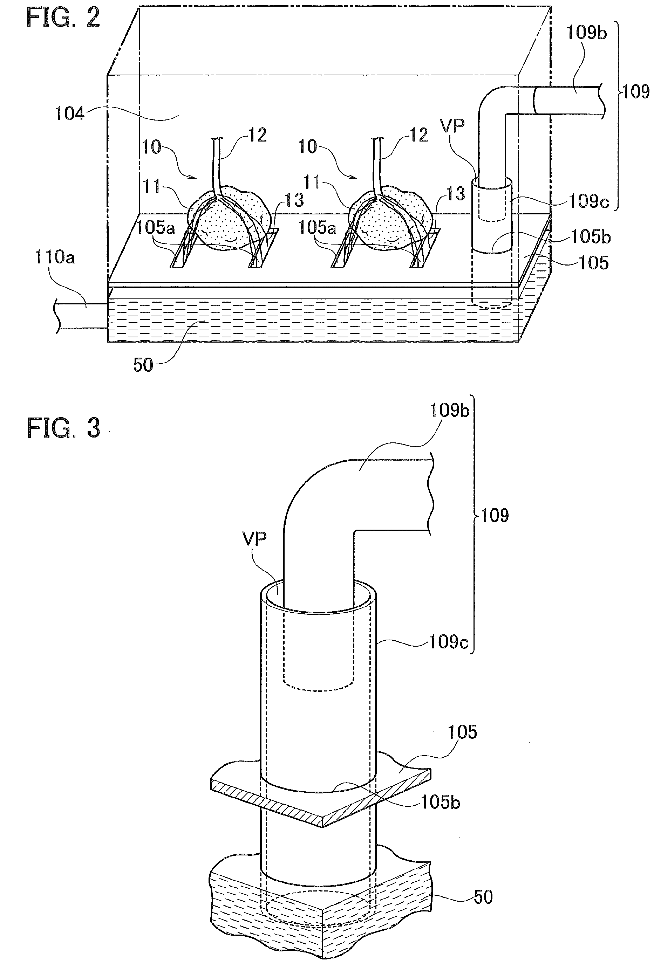

In general, a level of a surface of the nutrient solution 50 is varied in accordance with the growing state of the root 13 of the plant 10 and the remaining state of partial tissue of the plant 10 fallen off the plant 10. Accordingly, the amount of the nutrient solution 50 in the cultivation tank 106 may be increased in some cases. In this case, if a tip end portion of the supply flow channel 109 is positioned far below the surface of the nutrient solution 50, the flow rate of the nutrient solution 50 flowing into the cultivation tank 106 from the supply flow channel 109 is decreased by being affected by the pressure of the nutrient solution 50. However, as illustrated in Figs. 2 and 3, the supply flow channel 109 in this embodiment has a ventilation path VP that guides air from an external space of the supply flow channel 109 to an internal space of the supply flow channel 109 in order to inhibit the above-described decrease of the flow rate of the nutrient solution 50.

In other words, the above-described ventilation path VP allows the external space of the supply flow channel 109 and the internal space of the supply flow channel 109 to communicate with each other to inhibit the variation in the flow rate of the nutrient solution 50 flowing into the cultivation tank 106 from the supply flow channel 109. That is, depending on the state of the nutrient solution 50 flowing through the supply flow channel 109, external air flows into a space in the supply flow channel 109 by way of the ventilation path VP, or the air in the supply flow channel 109 flows out to the outside by way of the ventilation path VP.

This makes the flow of the nutrient solution 50 through the supply flow channel 109 smooth. Consequently, the flow rate of the nutrient solution 50 flowing into the cultivation tank 106 from the supply flow channel 109 is stabilized. Additionally, the concentration of oxygen in the nutrient solution 50 is increased by guiding the air from the external space of the supply flow channel 109 to the internal space of the supply flow channel 109. This increases the amount of oxygen suppliable to the root 13 of the plant 10. Note that, the configuration of the ventilation path VP may be anything as long as the configuration can inhibit the variation in the flow rate of the nutrient solution 50 flowing into the cultivation tank 106 from the supply flow channel 109 by enabling the external space of the supply flow channel 109 and the internal space of the supply flow channel 109 to communicate with each other.

In this embodiment, the supply flow channel 109 has the trunk flow channel 109a and the multiple branch flow channels 109b branched from the trunk flow channel 109a to guide the nutrient solution 50 by the pump 107 from the nutrient solution tank 108 to each of the multiple cultivation tanks 106. The ventilation path VP is provided in each of the multiple branch flow channels 109b.

In general, near the multiple branch flow channels 109b, there are variations in the growing state of the root 13 of the plant 10 and the remaining state of partial tissue of the plant 10 fallen off the plant 10. Accordingly, if the nutrient solution 50 is supplied from one pump 107 to each of the multiple cultivation tanks 106, there is a risk that the variation occurs in the flow rate of the nutrient solution 50 flowing into the cultivation tank 106 from each of the multiple branch flow channels 109b in accordance with the variations in the above-described states.

However, as described above, when the ventilation path VP is provided in each of the multiple branch flow channels 109b, the flow rate of the nutrient solution 50 flowing into the cultivation tank 106 from each of the multiple branch flow channels 109b is stabilized. This makes it possible to inhibit an increase of a difference in the supplied amount of the nutrient solution 50 to the cultivation tanks 106. That is, it is possible to maintain the balance between the amounts of the nutrient solution 50 flowing through the multiple cultivation tanks 106. Consequently, this prevents the nutrient solution 50 from not being supplied to any one of the multiple cultivation tanks 106 or prevents the underground part of the plant 10 from being immerged in the nutrient solution 50 in any one of the multiple cultivation tanks 106.

Additionally, the ventilation path VP is provided downstream of the flow amount adjustment unit 120 in the supply flow channel 109. This makes it possible to stabilize the flow rate of the nutrient solution 50 after the flow amount is adjusted. Consequently, it is possible to maintain a substantially constant value of the flow rate of the nutrient solution 50 more reliably.

As illustrated in Fig. 3, the ventilation path VP according to the invention is provided at the tip end of the branch flow channel 109b and is a clearance between the branch flow channel 109b and a tip end flow channel 109c having a diameter greater than that of the branch flow channel 109b. The branch flow channel 109b and the tip end flow channel 109c constitute the supply flow channel 109. The tip end flow channel 109c constituting the tip end portion of the supply flow channel 109 is inserted in a flow channel through-hole 105b. According to the invention, a lower end portion of the tip end flow channel 109c is inserted in the nutrient solution 50 with the lower end portion of the tip end flow channel 109c positioned at a predetermined distance from a bottom surface of the cultivation tank 106. Note that, the flow channel through-hole 105b and the tip end flow channel 109c are fixed on the other by a frictional force generated therebetween.

In this embodiment, both the branch flow channel 109b and tip end flow channel 109c constituting the supply flow channel 109 are formed of hoses made of flexible lubber. Note that, both the branch flow channel 109b and tip end flow channel 109c may be formed of rigid pipes such as vinyl chloride pipes.

In general, if the tip end portion of the supply flow channel 109 is provided at a height position far away from the surface of the nutrient solution 50, and the nutrient solution 50 pours from the tip end portion of the supply flow channel 109 to the surface of the nutrient solution 50, the nutrient solution 50 splashes from the surface. Thereby, the nutrient solution 50 is spread in the cultivation tank 106, and an underground part of the plant 10 other than the root 13 may get wet by the nutrient solution 50. In this case, a situation not favorable for the conditions for the growth of the plant 10 occurs. However, in this embodiment, the tip end flow channel 109c is inserted in the flow channel through-hole 105b, and the lower end portion of the supply flow channel 109 is positioned below the support unit 105. Thereby, the support unit 105 can inhibit the nutrient solution 50 from splashing and adhering to the underground part of the plant 10 other than the root 13.

As illustrated in Fig. 2, the support unit 105 supporting the underground part of the plant 10 and having the root through-hole 105a penetrating therethrough to immerge the root 13 of the plant 10 in the nutrient solution 50 is provided in the cultivation tank 106. The support unit 105 includes a mount area X in which the underground part of the plant 10 is disposed and a hole surrounding area Y having the flow channel through-hole 105b through which the supply flow channel 109 passes.

Note that, as another example of the hydroponics device 100 of this embodiment, although it is not illustrated, the nutrient solution 50 may be circulated between a single nutrient solution tank 108 and a single cultivation tank 106 by way of a single discharge flow channel 110 and a single supply flow channel 109. In this case, a single flow amount adjustment unit 120 is provided in the single supply flow channel 109. Such hydroponics device 100 also can obtain effects similar to the effects that can be obtained by the hydroponics device 100 of the above-described embodiment.

### (Embodiment 2)

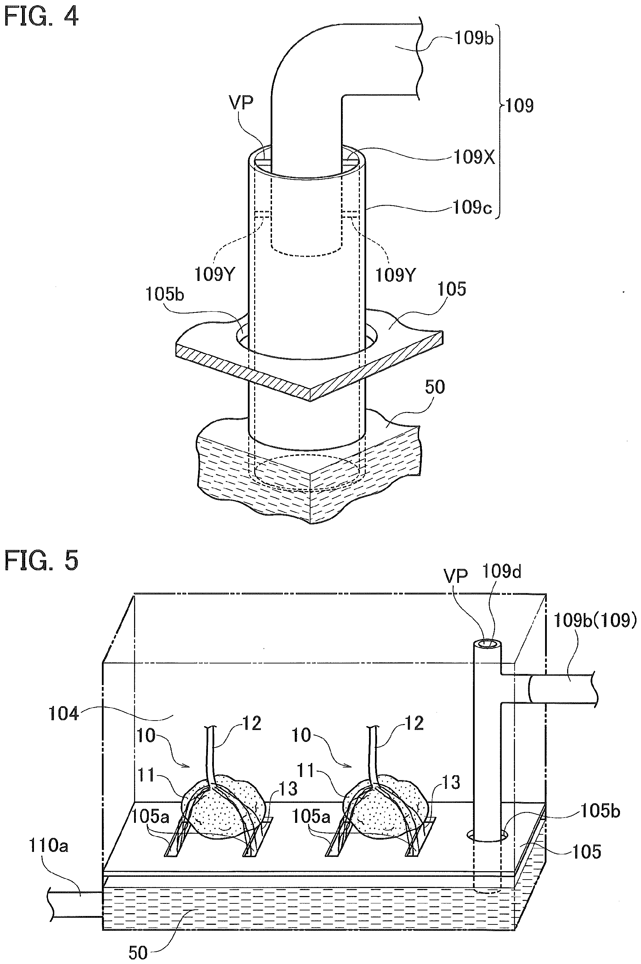

A hydroponics device 100 of an embodiment 2 is described with reference to Fig. 4. The hydroponics device 100 of this embodiment is different in the details described below from the above-described hydroponics device 100 of the embodiment 1.

As illustrated in Fig. 4, the ventilation path VP in this embodiment is also provided near the tip end of the branch flow channel 109b and is a clearance between the branch flow channel 109b having a predetermined inner diameter and the tip end flow channel 109c having an inner diameter greater than that of the branch flow channel 109b. Additionally, the supply flow channel 109 is inserted in the flow channel through-hole 105b. Note that, the tip end flow channel 109c and the branch flow channel 109b are coupled to each other with coupling members 109X and 109Y. A clearance or the ventilation path VP still exists between the flow channel through-hole 105b and the tip end flow channel 109c. This also stabilizes the flow rate of the nutrient solution 50 flowing into the cultivation tank 106 from the supply flow channel 109. Additionally, the support unit 105 can inhibit the nutrient solution 50 from splashing and adhering to the underground part of the plant 10. Consequently, it is possible to prevent the underground part of the plant 10 from being negatively affected by the adherence of the nutrient solution 50.

### (Embodiment 3)

A hydroponics device 100 of an embodiment 3 is described with reference to Fig. 5. The hydroponics device 100 of this embodiment is different in the details described below from the above-described hydroponics device 100 of the embodiment 1.

As illustrated in Fig. 5, a ventilation path VP is positioned in the cultivation tank 106 and is a ventilation piping unit 109d provided in the branch flow channel 109b constituting the tip end portion of the supply flow channel 109. The ventilation piping unit 109d is a cylindrical portion extending from a bending portion of the branch flow channel 109b. Such a configuration can implement the ventilation path VP with an extremely simple configuration. The ventilation piping unit 109d as the ventilation path VP may be provided in any position in the branch flow channel 109b as long as the position is downstream of the flow amount adjustment unit 120. The ventilation piping unit 109d may be a through hole that penetrates through a part of a piping unit constituting the branch flow channel 109b.

### (Embodiment 4)

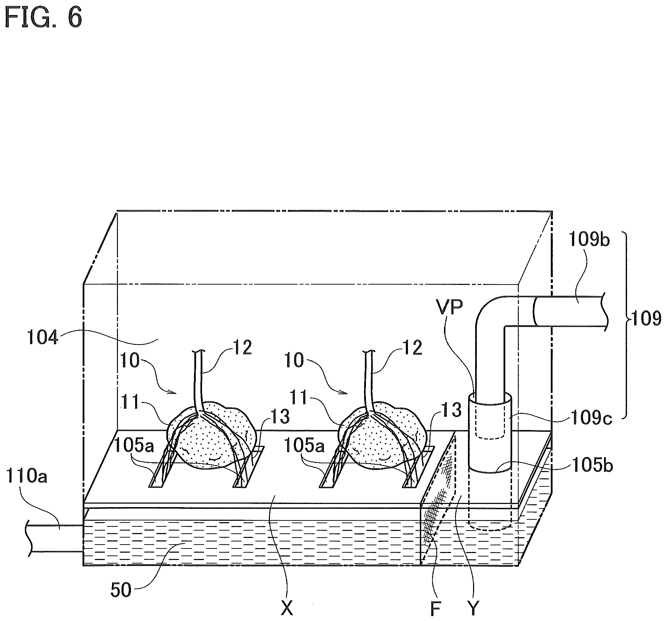

A hydroponics device 100 of an embodiment 4 is described with reference to Fig. 6. The hydroponics device 100 of this embodiment is different in the details described below from the above-described hydroponics device 100 of the embodiment 1.

As illustrated in Fig. 6, the support unit 105 supporting the underground part of the plant 10 and having the root through-hole 105a penetrating therethrough to immerge the root 13 of the plant 10 in the nutrient solution 50 is provided in the cultivation tank 106. The support unit 105 includes the mount area X in which the underground part of the plant 10 is disposed and the hole surrounding area Y having the flow channel through-hole 105b through which the supply flow channel 109 passes. The tip end portion of the supply flow channel 109 is inserted in the flow channel through-hole 105b downward from the above.

As illustrated in Fig. 6, in the hydroponics device 100, a filter F is provided below the support unit 105 in the cultivation tank 106, and the filter F in plan view extends vertically to separate the side of the supply flow channel 109 from the side on which the root 13 of the plant 10 exists. The filter F inhibits a part of the plant 10 or the tissue of a part of the plant 10 fallen off the plant 10 from entering the inside of the supply flow channel 109 from the tip end opening of the supply flow channel 109. That is, each of a number of holes of the filter F has the size that allows the nutrient solution 50 to pass therethrough but does not allow a part of the plant 10 or the partial tissue of the plant 10 fallen off the plant 10 to pass therethrough.

According to the hydroponics device 100 of this embodiment, a part of the plant 10, which is, for example, the root 13, or the partial tissue of the plant 10 fallen off the plant 10 is inhibited from interfering with the flow of the nutrient solution 50 flowing out from the supply flow channel 109. Consequently, it is easier to stabilize the flow rate of the nutrient solution 50 flowing through the supply flow channel 109 that guides the nutrient solution 50 to the cultivation tank 106. In this case, in the hydroponics device 100, at least the hole surrounding area Y is formed of a transparent material. This makes it easier to grasp the state of the tip end of the supply flow channel 109.

Note that, it is preferable for the transparent hole surrounding area Y to be formed as an independent member such that the hole surrounding area Y can be detached from the mount area X. This makes it easier to remove unnecessary foreign matters accumulated in the nutrient solution 50 near the tip end of the supply flow channel 109 and to clean up the periphery of the tip end of the supply flow channel 109.

### (Embodiment 5)

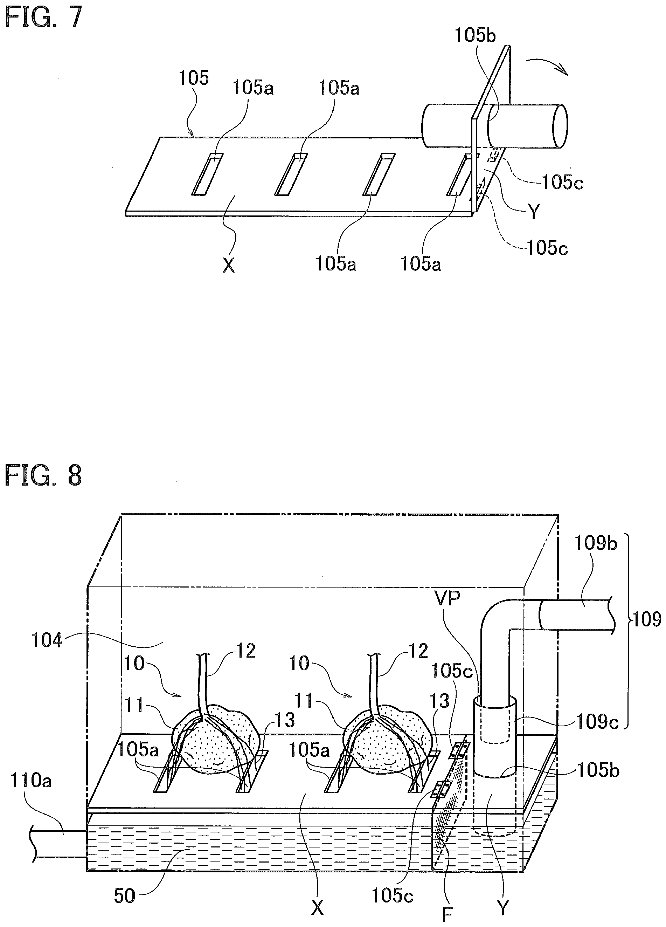

A hydroponics device 100 of an embodiment 5 is described with reference to Figs. 7 and 8. The hydroponics device 100 of this embodiment is different in the details described below from the above-described hydroponics device 100 of the embodiment 1.

As illustrated in Figs. 7 and 8, the hole surrounding area Y and the mount area X are connected to each other by a hinge 105c. Thus, in the hydroponics device 100 of this embodiment, the hole surrounding area Y has a door structure with which the hole surrounding area Y can be opened and closed, by pivoting about a rotational axis of the hinge 105c, with respect to an area other than the hole surrounding area Y, which is, for example, the mount area X. The hydroponics device 100 of this embodiment is different in only this point from the hydroponics device 100 of the embodiment 4 illustrated in Fig. 6.

According to the hydroponics device 100 of this embodiment, as illustrated in Fig. 7, it is possible to allow the hole surrounding area Y to pivot with the mount area X fixed. It is possible to open a space near the bottom surface of the cultivation tank 106 below the hole surrounding area Y This makes it easier to remove unnecessary foreign matters accumulated near the tip end of the supply flow channel 109 and to clean up the periphery of the tip end of the supply flow channel 109. Note that, even with the door structure, it is preferable that the hole surrounding area Y be formed of a transparent material to grasp the state of the periphery of the tip end of the supply flow channel 109 easily.

Next, characteristic configurations of the hydroponics devices 100 of the embodiments and the effects obtained therefrom are described.
(1) The hydroponics device 100 includes the cultivation tank 106, the nutrient solution tank 108, the supply flow channel 109, the discharge flow channel 110, and the pump 107. The cultivation tank 106 includes a flow channel through which the nutrient solution 50 to be supplied to the plant 10 flows. The nutrient solution tank 108 reserves the nutrient solution 50. The supply flow channel 109 guides the nutrient solution 50 from the nutrient solution tank 108 to the cultivation tank 106. The discharge flow channel 110 guides the nutrient solution 50 from the cultivation tank 106 to the nutrient solution tank 108. The pump 107 circulates the nutrient solution 50 between the nutrient solution tank 108 and the cultivation tank 106 by way of the supply flow channel 109 and the discharge flow channel 110. The supply flow channel 109 has the ventilation path VP that allows the external space of the supply flow channel 109 and the internal space of the supply flow channel 109 to communicate with each other. The ventilation path VP inhibits the variation in the flow rate of the nutrient solution 50 flowing into the cultivation tank 106 from the supply flow channel 109. This makes it possible to stabilize the flow rate of the nutrient solution 50 flowing into the cultivation tank 106 from the supply flow channel 109.
(2) Multiple cultivation tanks 106 are provided. The supply flow channel 109 has the trunk flow channel 109a and the multiple branch flow channels 109b branched from the trunk flow channel 109a to guide the nutrient solution 50 by the pump 107 from the nutrient solution tank 108 to each of the multiple cultivation tanks 106. The ventilation path VP is provided in each of the multiple branch flow channels 109b. This makes it possible to maintain the balance between the amounts of the nutrient solution 50 flowing through the multiple cultivation tanks 106.
(3) The hydroponics device 100 further includes the support unit 105 provided in the cultivation tank 106 to support the underground part of the plant 10. The support unit 105 has the root through-hole 105a provided such that the root 13 extending from the plant 10 reaches the nutrient solution 50 and has the flow channel through-hole 105b provided such that the tip end portion of the supply flow channel 109 is inserted therein. This allows the support unit 105 to inhibit the nutrient solution 50 from splashing and adhering to the underground part of the plant 10. Consequently, it is possible to prevent the underground part of the plant 10 from being negatively affected by the adherence of the nutrient solution 50.
(4) The support unit 105 may include the mount area X around the root through-hole 105a and the hole surrounding area Y around the flow channel through-hole 105b. In this case, at least the hole surrounding area Y may be formed of a transparent material. This makes it easier to grasp the state of the tip end of the supply flow channel 109.
(5) The support unit 105 may include the mount area X around the root through-hole 105a and the hole surrounding area Y around the flow channel through-hole 105b. In this case, the hole surrounding area Y may have the door structure with which the hole surrounding area Y can be opened and closed with respect to an area other than the hole surrounding area Y. This makes it possible to perform maintenance management such as cleaning up the periphery of the tip end of the supply flow channel 109 easily.
(6) It is preferable to further include the filter F in the cultivation tank 106, the filter F inhibiting a part of the plant 10 or the partial tissue of the plant 10 fallen off the plant 10 from entering the inside of the supply flow channel 109 from the tip end opening of the supply flow channel 109. This inhibits a part of the plant 10 or partial tissue of the plant 10 fallen off the plant 10 from interfering with the flow of the nutrient solution 50 flowing into the cultivation tank 106 from the supply flow channel 109.
(7) The supply flow channel 109 may include the flow amount adjustment unit 120 adjusting the flow amount of the nutrient solution 50 flowing through the supply flow channel 109. In this case, it is preferable for the ventilation path VP to be provided downstream of the flow amount adjustment unit 120 in the supply flow channel 109. This makes it possible to stabilize the flow rate of the nutrient solution 50 after the flow amount is adjusted. Consequently, it is easier to stabilize the flow rate of the nutrient solution 50 flowing into the cultivation tank 106 from the supply flow channel 109.

### REFERENCE SIGNS LIST

- 10: plant
- 50: nutrient solution
- 100: hydroponics device
- 105 a: root through-hole
- 105b: flow channel through-hole
- 106: cultivation tank
- 107: pump
- 108: nutrient solution tank
- 109: supply flow channel
- 109b: branch flow channel
- 109d: ventilation piping unit
- 110: discharge flow channel
- 120: flow amount adjustment unit
- F: filter
- X: mount area
- Y: hole surrounding area
- VP: ventilation path

## Claims

1. A hydroponics device (100), comprising:
a cultivation tank (106) that constitutes a flow channel through which a nutrient solution (50) to be supplied to a plant (10) flows;
a nutrient solution tank (108) that reserves the nutrient solution (50);
a supply flow channel (109) that guides the nutrient solution (50) from the nutrient solution tank (108) to the cultivation tank (106);
a discharge flow channel (110) that guides the nutrient solution (50) from the cultivation tank (106) to the nutrient solution tank (108);
a pump (107) that circulates the nutrient solution (50) between the nutrient solution tank (108) and the cultivation tank (106) by way of the supply flow channel (109) and the discharge flow channel (110), and
a support unit (105) provided in the cultivation tank (106) and configured to support an underground part of the plant (10), wherein
the supply flow channel (109) has a ventilation path (VP) that allows an external space of the supply flow channel (109) and an internal space of the supply flow channel (109) to communicate with each other,
the ventilation path (VP) inhibits a variation in a flow rate of the nutrient solution (50) flowing into the cultivation tank (106) from the supply flow channel (109),
**characterised in that**
a plurality of the cultivation tanks (106) is provided,
the supply flow channel (109) includes a trunk flow channel (109a) and a plurality of branch flow channels (109b) branched from the trunk flow channel (109a) to guide the nutrient solution (50) by the pump (107) from the nutrient solution tank (108) to each of the plurality of the cultivation tanks (106),
the support unit (105) has a root through-hole (105a) provided such that the root extending from the plant (10) reaches the nutrient solution (50) and has a flow channel through-hole (105b) provided such that a tip end portion of the supply flow channel (109) is inserted therein,
the ventilation path (VP) is provided at each tip end of the plurality of the branch flow channels (109b) and is a clearance between the branch flow channel (109b) and a tip end flow channel (109c) having a diameter greater than that of the branch flow channel (109b),
the branch flow channel (109b) and the tip end flow channel (109c) constitute the supply flow channel (109),
the tip end flow channel (109c) constituting the tip end portion of the supply flow channel (109) is inserted in the flow channel through-hole (105b), and
a lower end portion of the tip end flow channel (109c) is inserted in the nutrient solution (50) with the lower end portion of the tip end flow channel (109c) positioned at a predetermined distance from a bottom surface of the cultivation tank (106).

2. The hydroponics device (100) according to claim 1, wherein
the support unit (105) includes a mount area (X) around the root through-hole (105a) and a hole surrounding area (Y) around the flow channel through-hole (105b), and
at least the hole surrounding area (Y) is formed of a transparent material.

3. The hydroponics device (100) according to claim 1, wherein
the support unit (105) includes a mount area (X) around the root through-hole (105a) and a hole surrounding area (Y) around the flow channel through-hole (105b), and
the hole surrounding area (Y) has a door structure with which the hole surround area (Y) is openable and closable with respect to an area other than the hole surrounding area (Y).

4. The hydroponics device (100) according to any one of claims 1 to 3, further comprising:
a filter (F) in the cultivation tank (106), the filter (F) configured to inhibit a part of the plant (10) or partial tissue of the plant (10) fallen off the plant (10) from entering inside of the supply flow channel (109) from a tip end opening of the supply flow channel (109).

5. The hydroponics device (100) according to any one of claims 1 to 4, wherein
the supply flow channel (109) includes a flow amount adjustment unit (120) configured to adjust a flow amount of the nutrient solution (50) flowing through the supply flow channel (109), and
the ventilation path (VP) is provided downstream of the flow amount adjustment unit (120) in the supply flow channel (109).

## Patentansprüche

1. Hydroponikvorrichtung (100), aufweisend:
einen Kultivierungstank (106), der einen Strömungskanal darstellt, durch den eine einer Pflanze (10) zuzuführende Nährlösung (50) fließt;
einen Nährlösungstank (108), der die Nährlösung (50) vorhält;
einen Zufuhrströmungskanal (109), der die Nährlösung (50) von dem Nährlösungstank (108) an den Kultivierungstank (106) leitet;
einen Ausleitungsströmungskanal (110), der die Nährlösung (50) von dem Kultivierungstank (106) an den Nährlösungstank (108) leitet;
eine Pumpe (107), welche die Nährlösung (50) zwischen dem Nährlösungstank (108) und dem Kultivierungstank (106) über den Zufuhrströmungskanal (109) und den Ausleitungsströmungskanal (110) zirkuliert,
eine Stützeinheit (105), die in dem Kultivierungstank (106) vorgesehen ist und konfiguriert ist, einen unterirdischen Teil der Pflanze (10) zu stützen, wobei
der Zufuhrströmungskanal (109) einen Belüftungspfad (VP) aufweist, der ermöglicht, dass ein externer Raum des Zufuhrströmungskanals (109) und ein innerer Raum des Zufuhrströmungskanals (109) miteinander kommunizieren, und
der Belüftungspfad (VP) eine Schwankung einer Strömungsrate der Nährlösung (50) unterbindet, die von dem Zufuhrströmungskanal (109) in den Kultivierungstank (106) strömt,
**dadurch gekennzeichnet, dass**
eine Vielzahl von Kultivierungstanks (106) vorgesehen sind,
der Zufuhrströmungskanal (109) einen Hauptströmungskanal (109a) und eine Vielzahl von Zweigströmungskanälen (109b) aufweist, die von dem Hauptströmungskanal (109a) abzweigen, um die Nährlösung (50) durch die Pumpe (107) aus dem Nährlösungstank (108) an jeden der Vielzahl von Kultivierungstanks (106) zu leiten,
die Stützeinheit (105) ein Wurzeldurchgangsloch (105a) aufweist, das derart vorgesehen ist, dass die sich von der Pflanze (10) erstreckende Wurzel die Nährlösung (50) erreicht, und ein Strömungskanaldurchgangsloch (105b) aufweist, das derart vorgesehen ist, dass ein Spitzenendabschnitt des Zufuhrströmungskanals (109) darin eingesetzt ist,
der Belüftungsweg (VP) an jedem Spitzenende der Vielzahl von Zweigströmungskanälen (109b) vorgesehen ist und ein Freiraum ist zwischen dem Zweigströmungskanal (109b) und einem Spitzenendströmungskanal (109c) mit einem Durchmesser, der größer ist als jener des Zweigströmungskanals (109b),
der Zweigströmungskanal (109b) und der Spitzenendströmungskanal (109c) den Zufuhrströmungskanal (109) darstellen,
der Spitzenendströmungskanal (109c), der den Spitzenendabschnitt des Zufuhrströmungskanals (109) darstellt, in das Strömungskanaldurchgangsloch (105b) eingeführt ist, und
ein unterer Endabschnitt des Spitzenendströmungskanals (109c) in die Nährlösung (50) eingeführt ist, wobei der untere Endabschnitt des Spitzenendströmungskanals (109c) in einem vorgegebenen Abstand von einer unteren Fläche des Kultivierungstanks (106) positioniert ist.

2. Hydroponikvorrichtung (100) nach Anspruch 1, wobei
die Stützeinheit (105) einen Montagebereich (X) um das Wurzeldurchgangsloch (105a) herum sowie einen Lochumgebungsbereich (Y) um das Strömungskanaldurchgangsloch (105b) herum aufweist, und
zumindest der Lochumgebungsbereich (Y) aus einem transparenten Material gebildet ist.

3. Hydroponikvorrichtung (100) nach Anspruch 1, wobei
die Stützeinheit (105) einen Montagebereich (X) um das Wurzeldurchgangsloch (105a) herum sowie einen Lochumgebungsbereich (Y) um das Strömungskanaldurchgangsloch (105b) herum aufweist, und
der Lochumgebungsbereich (Y) eine Türstruktur aufweist, mit welcher der Lochumgebungsbereich (Y) in Bezug auf einen anderen Bereich als den Lochumgebungsbereich (Y) öffenbar und schließbar ist.

4. Hydroponikvorrichtung (100) nach einem der Ansprüche 1 bis 3, ferner aufweisend:
einen Filter (F) in dem Kultivierungstank (106), wobei der Filter (F) derart konfiguriert ist, dass er verhindert, dass ein Teil der Pflanze (10) oder ein Teilgewebe der Pflanze (10), das von der Pflanze (10) abgefallen ist, in den Zufuhrströmungskanal (109) von einer Spitzenendöffnung des Zufuhrströmungskanals (109) gelangt.

5. Hydroponikvorrichtung (100) nach einem der Ansprüche 1 bis 4, wobei
der Zufuhrströmungskanal (109) eine Durchflussmengen-Einstelleinheit (120) aufweist, die konfiguriert ist, eine Durchflussmenge der durch den Zufuhrströmungskanal (109) fließenden Nährlösung (50) einzustellen, und
der Belüftungsweg (VP) stromabwärts der Durchflussmengen-Einstelleinheit (120) in dem Zufuhrströmungskanal (109) vorgesehen ist.

## Revendications

1. Dispositif (100) de culture hydroponique, comprenant :
un bac de culture (106) destiné à former un canal d'écoulement à travers lequel coule une solution nutritive (50) à alimenter à une plante (10) ;
un réservoir (108) de solution nutritive destiné à contenir la solution nutritive (50) ;
un canal d'écoulement d'alimentation (109) destiné à guider la solution nutritive (50) du réservoir (108) de solution nutritive vers le bac de culture (106) ;
un canal d'écoulement d'évacuation (110) destiné à guider la solution nutritive (50) du bac de culture (106) vers le réservoir (108) de solution nutritive ;
une pompe (107) destinée à mettre en circulation la solution nutritive (50) entre le réservoir (108) de solution nutritive et le bac de culture (106) au moyen du canal d'écoulement d'alimentation (109) et du canal d'écoulement d'évacuation (110) ; et
une unité de support (105) disposée dans le bac de culture (106) et conçue pour porter une partie subsurface de la plante (10),
le canal d'écoulement d'alimentation (109) comportant un circuit de ventilation (VP) qui permet à un espace externe du canal d'écoulement d'alimentation (109) et à un espace interne du canal d'écoulement d'alimentation (109) d'être en communication l'un avec l'autre,
le circuit de ventilation (VP) empêchant une variation d'un débit de la solution nutritive (50) coulant vers le bac de culture (106) à partir du canal d'écoulement d'alimentation (109),
**caractérisé en ce que**
une pluralité des bacs de culture (106) est utilisée,
le canal d'écoulement d'alimentation (109) comprend un canal d'écoulement principal (109a) et une pluralité de canaux d'écoulement de branchement (109b) branchés à partir du canal d'écoulement principal (109a) afin de guider la solution nutritive (50), à l'aide de la pompe (107), du réservoir (108) de solution nutritive vers chaque bac parmi la pluralité de bacs de culture (106),
l'unité de support (105) comporte un trou traversant (105a) de racine disposé de sorte que la racine s'étendant à partir de la plante (10) atteigne la solution nutritive (50), et comporte un trou traversant (105b) de canal d'écoulement disposé de sorte qu'une partie d'extrémité de pointe du canal d'écoulement d'alimentation (109) soit introduite à son intérieur,
le circuit de ventilation (VP) est disposé au niveau de chaque extrémité de pointe de la pluralité des canaux d'écoulement de branchement (109b), et est un espace libre entre le canal d'écoulement de branchement (109b) et un canal d'écoulement d'extrémité de pointe (109c) présentant un diamètre supérieur à celui du canal d'écoulement de branchement (109b),
le canal d'écoulement de branchement (109b) et le canal d'écoulement d'extrémité de pointe (109c) constituent le canal d'écoulement d'alimentation (109),
le canal d'écoulement d'extrémité de pointe (109c), constituant la partie d'extrémité de pointe du canal d'écoulement d'alimentation (109), est introduit dans le trou traversant (105b) de canal d'écoulement, et
une partie d'extrémité inférieure du canal d'écoulement d'extrémité de pointe (109c) est introduite dans la solution nutritive (50), la partie d'extrémité inférieure du canal d'écoulement d'extrémité de pointe (109c) étant positionnée à une distance prédéfinie d'une surface inférieure du bac de culture (106).

2. Le dispositif (100) de culture hydroponique selon la revendication 1, dans lequel
l'unité de support (105) comprend une zone de montage (X) autour du trou traversant (105a) de racine et une zone environnante de trou (Y) autour du trou traversant (105b) de canal d'écoulement, et
au moins la zone environnante de trou (Y) est formée à partir d'un matériau transparent.

3. Le dispositif (100) de culture hydroponique selon la revendication 1, dans lequel
l'unité de support (105) comprend une zone de montage (X) autour du trou traversant (105a) de racine et une zone environnante de trou (Y) autour du trou traversant (105b) de canal d'écoulement, et
la zone environnante de trou (Y) comporte une structure de porte à l'aide de laquelle la zone environnante de trou (Y) peut être ouverte et fermée par rapport à une zone autre que la zone environnante de trou (Y).

4. Le dispositif (100) de culture hydroponique selon l'une quelconque des revendications 1 à 3, comprenant en outre :
un filtre (F) dans le bac de culture (106), le filtre (F) étant conçu pour empêcher l'entrée d'une partie de la plante (10), ou d'un tissu partiel de la plante (10) se détachant de la plante (10), à l'intérieur du canal d'écoulement d'alimentation (109) à partir d'une ouverture d'extrémité de pointe du canal d'écoulement d'alimentation (109).

5. Le dispositif (100) de culture hydroponique selon l'une quelconque des revendications 1 à 4, dans lequel
le canal d'écoulement d'alimentation (109) comprend une unité (120) de réglage de quantité d'écoulement, conçue pour régler une quantité d'écoulement de la solution nutritive (50) coulant à travers le canal d'écoulement d'alimentation (109), et
le circuit de ventilation (VP) est disposé en aval de l'unité (120) de réglage de quantité d'écoulement dans le canal d'écoulement d'alimentation (109).
